# EUROPEAN PATENT APPLICATION

(11) **EP 4 057 723 A1**
(43) Date of publication of application: **14.09.2022**
(21) Application number: 21162285.7
(22) Date of filing: 12.03.2021
(51) Int. Cl.: H04W 72/02, H04W 76/14

(54) **SYSTEM AND METHOD FOR SIDELINK RESOURCE RESERVATION**

(71) Applicant: Robert Bosch GmbH, 70442 Stuttgart (DE)
(72) Inventor: Hassan, Khaled Shawky, 30880 Laatzen (DE); Sambale, Klaus, 46047 Oberhausen (DE); Brahmi, Nadia, 31139 Hildesheim (DE); Bezmenov, Maria, 30171 Hannover (DE)

(57) **Abstract**

A wireless communication method for dynamically adapting resource reservation of a sidelink channel using semi persistent scheduling, comprising receiving, at a first item of user equipment, a first and a second item of data for transmission via a semi persistent scheduling mode, and a status indication of a shared wireless resource pool of the first item of user equipment and the one or more second items of user equipment, notifying, by the first item of user equipment, an initial semi persistent scheduling reservation for the first item of data to the one or more second items of user equipment via the shared resource pool, notifying, by the first item of user equipment, one or more second items of user equipment of at least one reservation of a wireless resource defined in the shared wireless resource pool according to a declaration comprised in a further semi persistent scheduling reservation of the sidelink channel, wherein the declaration signals the establishment, alteration, or cancellation of at least one semi persistent scheduling reservation in respect of the first and/or second item of data, and transmitting, by the first item of user equipment, the second item of data for transmission to the one or more second items of user equipment via the sidelink channel in a transmission opportunity of the shared wireless resource pool defined by the declaration.

## Description

### TECHNICAL FIELD

This specification relates to a wireless communication method for dynamically adapting resource reservation of a sidelink channel using semi persistent scheduling, and an associated apparatus, system, and computer readable medium.

### BACKGROUND

Connected mobility is the subject of a variety of communication standards such as IEEE 802.11p/bd and 3GPP LTE/NR V2X (shortened in this specification to "V2X"). Two scenarios are considered for V2X - that User Equipment (UE) can be within communication range of a base station (BS) such as an evolved-Node BS (eNB) or a 5G-NR-Node BS (gNB), or out of communication range. Another scenario is that a proportion of the UEs that are connected together may be connected to the network, and the remainder of the UEs that are connected together may be out of network coverage. This is referred to as partial out of coverage.

Typically, when UE (for example, UE mounted in a vehicle) is in coverage, the UE can be configured to perform sidelink communication with other UEs in range. In this case, resource allocation, data control, and communication procedures are controlled by the UE. In the case that a UE is out of coverage of, for example, EUTRA or 5G-NR cells, the UE is pre-configured with mandatory configuration for autonomous communication using the sidelink. In example, a UE can be pre-configured with a number of out-of-coverage frequencies. As an example, the out-of-coverage frequencies may include the Intelligent Transport System (ITS) frequencies.

In order that U Es can select sidelink resources, V2X provides for two operation modes for performing resource assignment. Mode one is controlled by the network. UEs are either dynamically granted sidelink resources that they request via the network, or are periodically configured with semi-persistent sidelink resources. Mode two enables UEs to select their resources autonomously based on respective needs of each UE from configured (or pre-configured) time and frequency resources referred to as shared resource pools.

V2X mode one requires the UEs to have network coverage. Mode two may be configured during a time when the UEs possess network coverage. When at least one UE is out of network coverage, Mode two is, for example, automatically selected enabling at least one UE to select its own sidelink resources from the preconfigured shared resource pool.

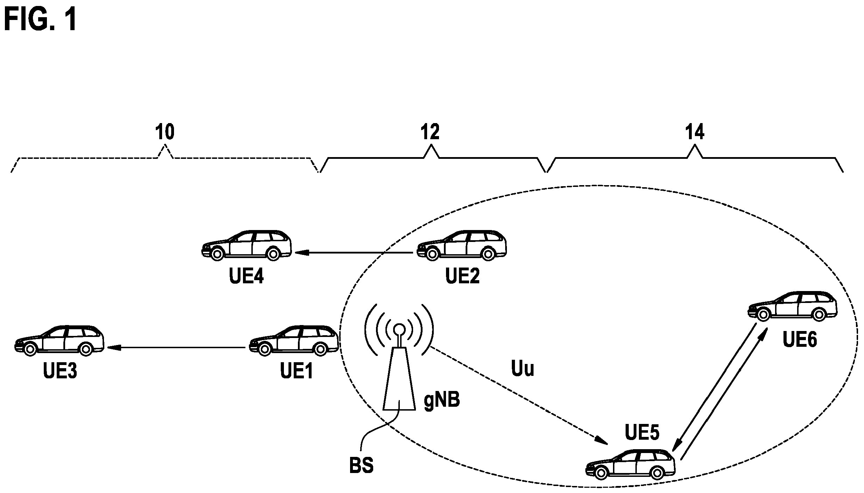

Fig. 1 schematically illustrates an example of a "V2X" configured sidelink utilising mode 1 and mode 2. Region 10 is outside of network coverage provided by a BS. Region 12 is a region of partial coverage. Region 14 is in coverage. UE1 communicates with UE2 via a sidelink channel in Mode 2, for example. UE2 communicates from the region of partial coverage to an out-of-coverage UE4 via the sidelink channel in Mode 2. UE5 communicates with UE6 via a sidelink channel in Mode 1, as configured by control information Uu from the BS.

The present specification is concerned with sidelink configuration in Mode 2, as discussed in Release 16 of the document 3GPP TS 38.214 V16.4.0 (2020-12), pp 151-164, section 8, "Physical Shared Channel Related Procedures". Therefore, Mode 1 will not be further discussed. In Mode 2, the UE autonomously selects a set of periodic configured resources as an outcome of persistent sensing. In 3GPP, this is referred to as "semi-persistent scheduling" (SPS) sensing. However, such approaches may be further improved.

### SUMMARY

According to a first aspect, there is provided a wireless communication method for dynamically adapting resource reservation of a sidelink channel using semi persistent scheduling, comprising:
- receiving, at a first item of user equipment, a first and a second item of data for transmission via a semi persistent scheduling mode, and a status indication of a shared wireless resource pool of the first item of user equipment and one or more second items of user equipment;
- notifying, by the first item of user equipment, an initial semi persistent scheduling reservation for the first item of data to the one or more second items of user equipment via the shared resource pool;
- notifying, by the first item of user equipment, one or more second items of user equipment of at least one reservation of a wireless resource defined in the shared wireless resource pool according to a declaration comprised in the initial or a further semi persistent scheduling reservation of the sidelink channel, wherein the declaration signals the establishment, alteration, or cancellation of at least one semi persistent scheduling reservation in respect of the first and/or second item of data; and
- transmitting, by the first item of user equipment, the second item of data for transmission to the one or more second items of user equipment via the sidelink channel in a transmission opportunity of the shared wireless resource pool defined by the declaration comprised in the initial or the further semi persistent scheduling reservation.

According to a second aspect, there is provided a wireless device configured for dynamically adapting resource reservation of a sidelink channel using semi persistent scheduling, comprising:
- non-transitory computer readable media comprising machine readable instructions; and
- a processor configured to load and to execute the machine readable instructions to cause the wireless device to execute the steps according to the first aspect.

According to a third aspect, there is provided a system for wireless communication, comprising:
- a first item of user equipment; and
- a second item of user equipment.

The first item of user equipment is configured to receive a first and a second item of data for transmission via a semi persistent scheduling mode, and a status indication of a shared wireless resource pool of the first item of user equipment and at least second item of user equipment.

The first item of user equipment is configured to notify, by the first item of user equipment, an initial semi persistent scheduling reservation for the first item of data to at least the second item of user equipment via the shared resource pool.

The first item of user equipment is configured to notify at least the second item of user equipment of at least one reservation of a wireless resource defined in the shared wireless resource pool according to a declaration comprised in the initial or a further semi persistent scheduling reservation of the sidelink channel, wherein the declaration signals the establishment, alteration, or cancellation of at least one semi persistent scheduling reservation.

The first item of user equipment is configured to transmit, by the first item of user equipment, the second item of data for transmission to at least the second item of user equipment via the wireless resource in a transmission opportunity of the shared wireless resource pool defined by the declaration comprised in the initial or the further semi persistent scheduling reservation.

According to a fourth aspect, there is provided a computer readable medium comprising machine readable instructions configured to cause a processor to perform the method according to the first aspect.

According to a fifth aspect, there is provided a wireless communication method for dynamically adapting resource allocation of a sidelink channel using semi persistent scheduling further comprising:
- receiving, via a signaled declaration, at the second item of user equipment, the declaration comprised in the initial semi persistent scheduling reservation of the sidelink channel, and
- obtaining, by the signaled declaration, at least one further semi persistent scheduling reservation using the information comprised in the declaration the initial semi persistent scheduling reservation; and
- receiving, at the second item of user equipment, data from the first item of user equipment during the at least one further semi persistent scheduling reservation, wherein allocation implies exclusion, or vacating, of selected resources at the receiver.

In general, according to the present techniques, one or more UEs may handle different data or traffic arrival or different services simultaneously. Furthermore, one or more

UEs may use the SPS scheme discussed herein to act as a UE relay, receiving multiple transmissions from different UEs with different traffic requirements.

In general, an approach is discussed in which a UE having an initial sidelink SPS configuration can handle a change in transmission context, or the arrival or more data to transmit than is possible within QoS constraints on the initial sidelink SPS configuration. The arrival of additional data causes the UE to add periodic resources to the sidelink SPS configuration by making a declaration to other UEs. Dependent on the mode of extra resources chosen, the declaration may comprise information about a time offset of extra transmissions, the frequency of extra transmissions, and the like.

In an example, the UE sets a reserved bit in the declaration. The UE may set an offset in a second sidelink control channel. The UE may set an offset in a extended first SCI format. The periodic resources are configured at a certain resource of periodic reservations and is triggered by the initial period. Once the periodic reservations are not needed, the UE optionally sends a further declaration in the last data transmission to release the additional SPS resource in the sidelink. In an example, a new period may be referenced in the last possible one or in the next subsequent initial period. In an example, if an initial SPS reservation has a priority P, the extra reservation (if not used) will obtain priorities P-1, P-2 automatically. If used, then it will get the priority from the transmit priority field of the data. In an example, in the case of re-evaluation of pre-reserved resources: A TX-UE may evaluate or pre-empt a second or third unused reservation, even if conditions are not met. An RX-UE may re-evaluate or pre-empt its reservations based on the multiple periods.

In an example, a hybrid SPS period may be configured in addition to an existing periodic SPS reservation. For example, a TX UE may start transmitting an initial transmission with a periodic reservation P1 and setting a reserved bit_2 to 0. In an example, a TX UE may receive multiple traffic with different periodic requirements, then a UE sets a reserved bit (for example, in a declaration of an initial or additional SPS reservation), and sends another periodic reservation with a different source ID. In an example, the source ID may be the source ID of the UE sending to a relay. In an example, the source ID may be the source ID of a UE and truncated to a configured resources ID. In an example, a UE may drop one ID, and use the same ID for a new SPS reservation. In an example, if a TX UE collides, and the UE detects this collision, the UE may select a transmission with the highest priority and drop the lower one, or select transmission with the highest priority and drop the lower.

### FIGURE DESCRIPTION

Fig. 1 schematically illustrates an example of a "V2X" configured system comprising a sidelink utilising mode 1 and mode 2.
Fig. 2 schematically illustrates an example of time and frequency resource configuration and indication.
Fig. 3 schematically illustrates SPS-configured resource reservations without blind retransmission.
Fig. 4 schematically illustrates an example of a "V2X" system with multiple quality of service requirements.
Fig. 5 schematically illustrates an example of a "V2X" system acting as a relay.
Fig. 6 schematically illustrates a method according to the first aspect.
Fig. 7 schematically illustrates a sequence chart of an example of TX UE to RX UE communication.
Fig. 8 schematically illustrates an additional SPS reservation in an initial reservation.
Fig. 9 schematically illustrates additional SPS configuration using a flag and time offset approach.
Fig. 10 schematically illustrates additional SPS configuration using a flag and time offset approach with flexibly allocated frequency resources.
Fig. 11 schematically illustrates additional SPS periods using sequential reservation.
Fig. 12 schematically illustrates an example of an additional SPS period with series reservation with forward reservation and optional backward reservation.
Fig. 13 schematically illustrates multiple SPS configuration fields in initial and additional SPSs.
Fig. 14 schematically illustrates multiply configured SPS resources with indexing and frequency offset.
Fig. 15 schematically illustrates an alternative case of two additional SPS.
Fig. 16 schematically illustrates an alternative case of two additional SPS with different periodicity and frequency index.
Fig. 17 schematically illustrates wireless device in accordance with the second aspect.

### DETAILED DESCRIPTION

Fig. 1 schematically illustrates an example of a "V2X" configured sidelink utilising mode 1 and mode 2, as discussed in the background section.

As an example of resource configuration, a gNB may configure resources in both time and/or frequency, and indicate the resources to one or more UEs via, for example, broadcast information (MIB or SIB) or dedicated RRC/L1/L2 signalling. Resources in time may comprise one or any combination of timeslots, subframe numbers, time symbol indices, and/or other synchronisation parameters. Resources in frequency may be allocated contiguously, or non-contiguously. Resources and frequency may be varied based on the timeslot, subframe number, or time symbol index, for example.

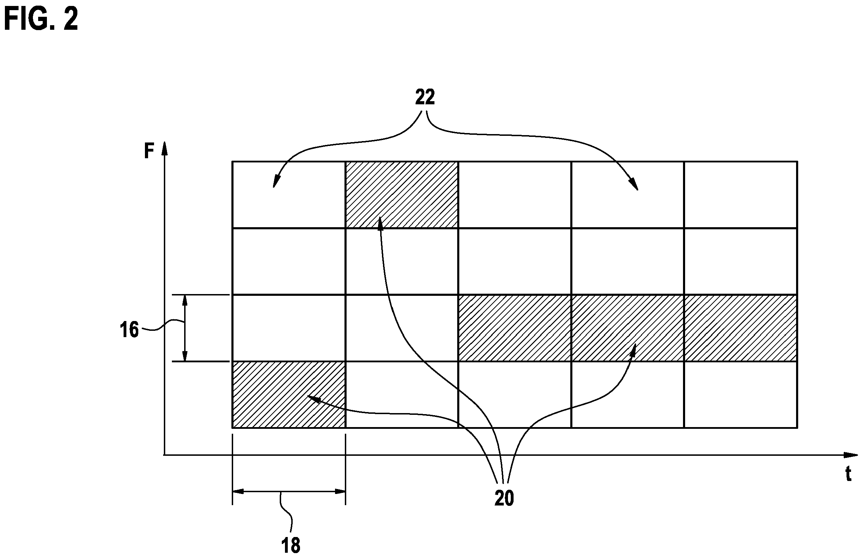

Fig. 2 schematically illustrates an example frequency and time resource configuration and indication shown on frequency against time axes. A frequency resource block 16 (subchannel, subcarrier or group of subcarriers) is broadcast in a given time slot 18. A first portion of the resources 20 are UE autonomously allocated resources. A second portion 22 of the resources are gNB-controlled resources indicated (or configured by) a gNB or likewise. Frequency resources may be indicated to a UE in a bandwidth part BWP where a UE is able to communicate on and configured to the BWP. The UE may be configured with one or more BWPs. A BWP maybe part, or all, of the system bandwidth in a certain frequency band.

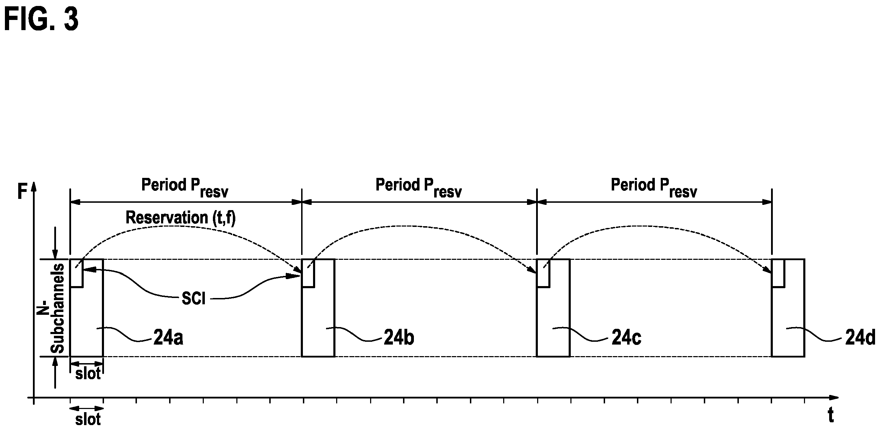

Fig. 3 schematically illustrates SPS-configured resource reservations without blind retransmission as used in Mode 2 of V2X. For example, if a sidelink process is configured to perform transmissions of multiple MAC-PDUs, a counter may be maintained, for example a counter named
"SL_RESOURCE_RESELECTION_COUNTER". Assuming the MAC provides more than a single MAC-PDU, and no other configured sidelink grants exist, the UE may initially trigger a selection counter to configure resources with one or any combination of the following list: frequency resources, time resources, periodicity, MCS (modulation and coding scheme), TBS, and power settings. A first SPS reservation 24a comprises sidelink control information SCI.

After semi-persistent sensing, multiple sidelink resources are selected for multiple periods equal to the counter value "SL_RESOURCE_RESELECTION_COUNTER", for example. In an embodiment, before the counter expires (which, for example, is decremented every sidelink transmission), the UE can keep resources relative to a probability of keeping the resources defined by probability P, sometimes named "probResourcesKeep" in SPS schemes.

Semi persistent scheduling is illustrated by Fig. 3 shows, in Mode 2, that whenever a package arrives, a reselection procedure is triggered if the packet would exceed its packet delay budget PDB using the existing configured resources. Reselection comprises clearing previously configured sidelink resources, and selecting new sidelink resources from the wireless resource pool for transmission of the packet. In an example, the MAC-PDU buffer may be monitored to ensure that queued MAC-PDUs do not exceed a threshold. If the queued MAC-PDUs do exceed a threshold, the transmission mode may be changed from a one-shot transmission, to configured sidelink resources, or vice-versa.

SPS-configured resource reservation with resource reselection is discussed in the TS 38.211-214 standard.

The current semi persistent scheduling approach to allocating resources of the sidelink channel, for example in V2X, leads to the problem of how to clear previously configured sidelink resources and the selection of new resources. For example, on average, the number of configured resources is smaller than the RC. Neighbouring UEs may assume that the SPS is only skipped, rather than cancelled. This implies that local UEs performing sensing will wrongly assume that free resource in the sidelink channel is reserved, thus limiting the channel capacity. The packet triggering of the new resource section might not be representative for the general packet traffic of the UE.

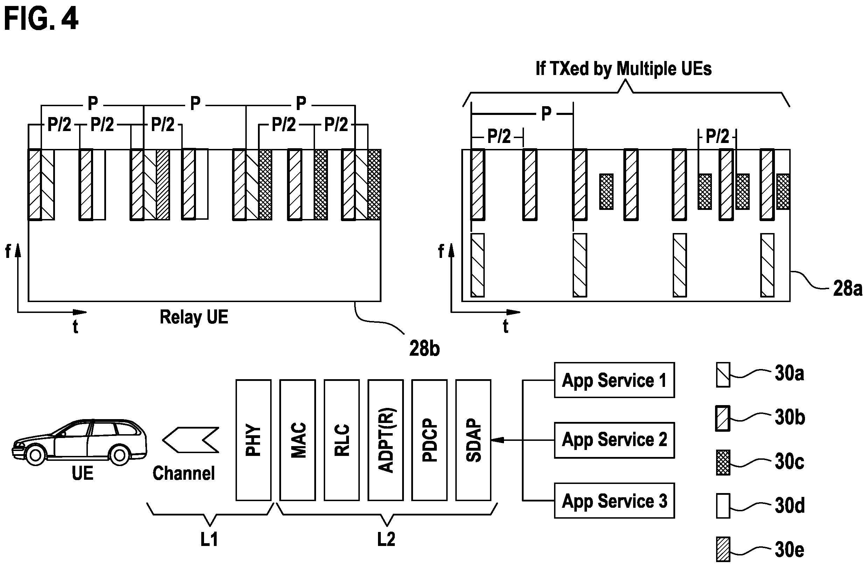

Fig. 4 schematically illustrates an example of a "V2X" system with multiple quality of service requirements. Data of type 30a, 30b, and 30c represents resource usage caused by three services having varying quality of service requirements. Resources occupied by 30d represent an empty slot, and resources occupied by 30e represent a one-shot transmission. A first shared resource pool 28a shows that, if multiple different UEs transmit into the same shared resource pool 28a using conventional semi persistent scheduling, the overall efficiency of shared resource use is relatively low, compared to the second shared resource pool 28b. In the second shared resource pool 28b, a relay UE uses a method of wireless communication according to the first aspect to dynamically adapt resource reservations of a sidelink channel using semi persistent scheduling. It may be seen that the frequency occupancy of the second shared resource pool 28b is more efficient, allowing the same set of resource to be allocated whilst leaving a substantial portion of the frequency domain of the second shared resource pool 28b vacant, compared to conventional SPS.

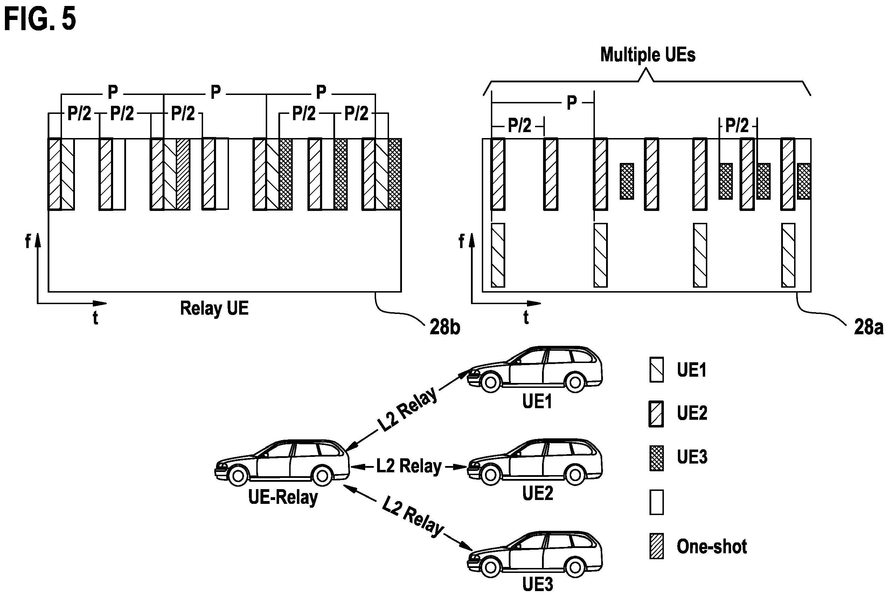

Fig. 5 schematically illustrates an example of a "V2X" system acting as a relay. The shared wireless resource pool 28a is relatively inefficiently utilised, because UE1, UE2, and UE3 are performing SPS in an uncoordinated manner. In contrast, with a UE-Relay concatenating SPS reservations into a smaller frequency subcarrier space, the efficiency of the occupied frequency subcarrier space is much increased compared to conventional SPS. The relay UE receives multiple traffic types from different TX UEs, with each traffic type having a different arrival rate, latency requirement, and periodicity.

Furthermore, UEs often must handle a diversity of traffic types each having multiple traffic requirements (for example, high bandwidth and low latency, or vice versa). It is difficult for a UE with multiple traffic requirements to keep a single SPS configuration without needing to change it frequently. This becomes a particular problem with bursty, event driven traffic, where every change of context owing to burstiness triggers a full reselection routine.

Conventional V2X sidelink SPS does not allow reconfigurations or adaptation, and neither does it allow multiple configured grants as they are difficult to configure by addressing one TX UE to a plurality of RX UEs.

The techniques according to the present application propose at least two solutions to this. Firstly, according to an embodiment, a multiple period reservation may be configured and adapted based on an initial SPS reservation. Secondly, according to an embodiment, an initial SPS may configure multiple additional SPS sequences. The techniques are applicable in the time domain, frequency domain, or a combination of both.

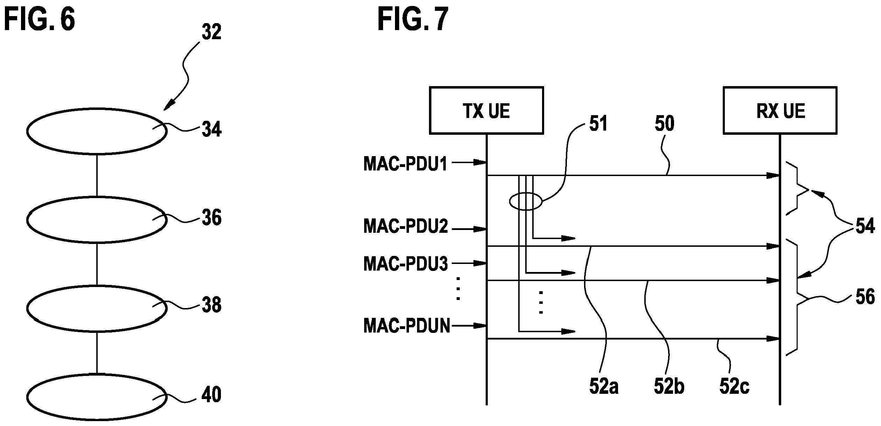

Fig. 6 schematically illustrates a method according to the first aspect.

According to a first aspect, there is provided a wireless communication method 32 for dynamically adapting resource reservation of a sidelink channel using semi persistent scheduling, comprising:
- receiving 34, at a first item of user equipment UE1, a first and a second item of data MAC-PDU1,2 for transmission via a semi persistent scheduling SPS mode, and a status indication of a shared wireless resource pool of the first item of user equipment and one or more second items of user equipment;
- notifying 36, by the first item of user equipment UE1, an initial semi persistent scheduling reservation for the first item of data to the one or more second items of user equipment UE2 via the shared resource pool;
- notifying 38, by the first item of user equipment UE1, one or more second items of user equipment UE2 of at least one reservation of a wireless resource defined in the shared wireless resource pool according to a declaration SCI comprised in the initial or a further semi persistent scheduling reservation of the sidelink channel, wherein the declaration SCI signals the establishment, alteration, or cancellation of at least one semi persistent scheduling reservation in respect of the first and/or second item of data; and
- transmitting 40, by the first item of user equipment UE1, the second item of data for transmission MAC-PDU2 to the one or more second items of user equipment UE2 via the sidelink channel in a transmission opportunity TO of the shared wireless resource pool defined by the declaration comprised in the initial or the further semi persistent scheduling reservation.
The techniques according to the first aspect enable better processing of mixtures of different traffic types using SPS. UE is acting as a relay can do so more reliably. Sidelink reliability is less prone to outliers or burst unison the traffic pattern. Sidelink reconfigured less often, leading to a reduction in signaling overhead.

In an example of the first aspect, the first item of user equipment UE1 may be a transmit UE (TX UE) and the second item of user equipment UE2 may be a receive UE (RX UE). It is assumed, as an example, that a TX UE configures an initial periodic resource reservation allocating N subchannels in frequency F, at an initial offset T. Optionally, the same frequency resources may be allocated at every period P. If multiple SPS periods are configured (for example, per resource, pool per UE, and/or per priority), a UE selects the periodic resource of the initial transmission in a set subchannel with possible free resources at a different offset from a transmission opportunity TO.

Optionally, once data is delayed, or more data (MAC-PDU N), or more data arrives before, or slightly after, a transmission opportunity TO, the TX UE can, in an example, allocate more periodic resources, or one-shot resources, to an upcoming transmission slot. In an example, the subsequent additional transmission can be allocated either in the same frequency resources, or on any resources starting from the first subchannel of the initial periodic reservation.
Therefore, in an embodiment, the additional periodic resources are configured in resources that are transmitted in the initial periodic reservation. When the initial periodic reservations are not needed, the TX UE can, in an example, send the last data in the additional resources with a flag set to 0 to release the SPS reservation of the shared resource pool.

In an embodiment, a receiver UE (RX UE) in the initial period can identify the location of the initial periods of the SPS reservation if they are triggered in the initial periodic reservation as defined above (for example, using a combination of a first flag and the time officer). The receiver UE, which identifies the additional periods by decoding the configuration flags or information within the initial period, may use these identified resources to exclude them for its resource for reselection procedure, re-evaluation, or pre-emption.

According to an embodiment, the first item of user equipment is configured to function as a UE Relay (as illustrated in Fig. 5). A UE relay may apply the method for dynamically adapting resource reservation of a sidelink channel using semi persistent scheduling according to the first aspect, or its embodiments. According to this embodiment, the first item of user equipment is configured to receive the first item of data from a third item of user equipment, and a second item of data from a fourth item of user equipment. The UE relay is configured to relay the first and second items of data to at least one further item of user equipment communicatively connected to the UE relay.

Fig. 7 schematically illustrates a sequence chart according to an embodiment. In an example, initial data MAC-PDU1 arrives at the TX UE and is transmitted with a transmission opportunity TO of the TX UE's initial SPS reservation with no additional periods. Once received at the RX UE, the initial SPS 50 is configured according to the conventional SPS algorithm. Additional data MAC-PDU1, 2... N may continue to arrive at TX UE. Arrows 51 branching from the initial SPS 50 represent the fact that an additional SPS reservation flag was set in the initial SPS reservation. Therefore, as additional data MAC-PDU1, 2... N (possibly with varying quality of service demands) arrives at the TX UE, it may be communicated via the sidelink using the initial or additional SPS provision in the shared resource pool. As will be explained later, the configurations of flag and offset provides periods 54, 56 that may, in examples, be used for resource exclusion, re-evaluation, and pre-emption by the RX UE.

### Configuration Content in Initial SPS

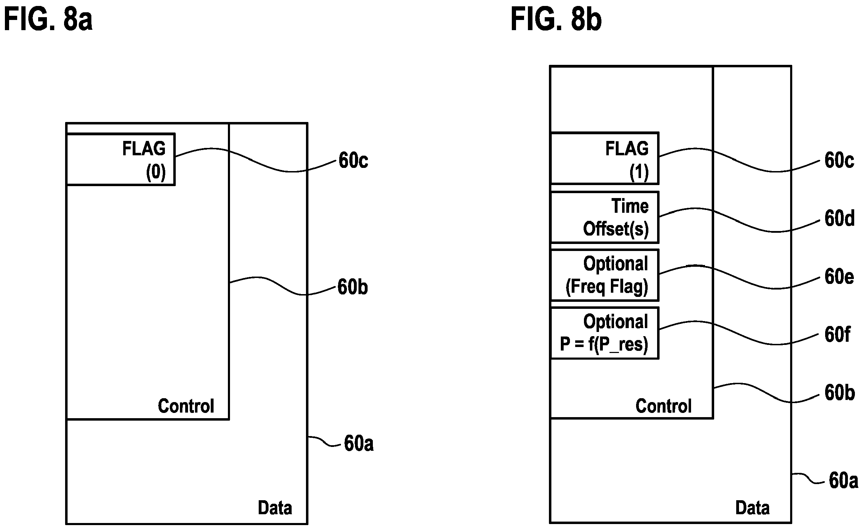

Fig. 8a schematically illustrates an additional SPS reservation in an initial reservation. Data field 60a comprises a control field 60b, which in turn comprises a flag field 60c setting a transmission opportunity TO of a TX UE's initial SPS reservation with no additional periods when the flag is set to zero. A skilled person will appreciate that this is a nonlimiting example of how to encode the fact that no additional SPS periods are required.

Fig. 8b schematically illustrates a transmission opportunity TO of a TX UE when transmitting an initial SPS reservation which makes provision for additional SPS reservations (such as 52a, 52b, 52c). An example, a first UE (TX UE) may detect that plurality of additional data MAC-PDU1, 2...N is received at the MAC of the first UE (TX UE). The first UE is configured to allocate additional shared resource in the shared resource pool of the side channel and configure them. The first UE signals the use of the additional shared resource using at least a declaration SCI. In an example, the declaration SCI may comprise the flag field 60c and a first time offset 60d. In an example, the declaration may further comprise a frequency flag 60e configured to indicate which portions of the frequency resource (subchannels) the additional SPS reservations should occupy. In an example, the declaration further comprises a reservation release flag 60f, an indicator to signal a release of the additional SPS after the current transmission.

In a sidelink control channel, a first flag of the declaration SCI may comprise a reserved bit of the control field 60b that is set from "0" to "1", although skilled person will appreciate that this is one of many signalling schemes. Furthermore, the declaration SCI may comprise a field 60d defining a time offset. This enables the selection by a TX UE or an RX UE of subsequent transmission resources at same frequency allocation after a time offset Δt1, where 0<Δt1<P, where Δt1 fulfils the new packet delay budget PDB. The time offset Δt1 may, thus, be declared in a sidelink control channel 60b.

In use, the TX UE may notify to a UX RE an SCI in which the first flag is initially set to 0. In this case, the TX UE does not reserve other additional periods. Alternatively, the TX you we may be seen as a single SPS UE (such as in older versions of the SPS reservation in V2X 3GPP. In an example, if the declaration and its associated flag may not be supported in respect of a shared resource pool, or for a certain frequency band, or for a certain configuration. In such a case, the TX UE may be instructed by a base station gNB or by a pre-configurations stored in the TX UE to set the first flag to zero. When the feature is enabled, the TX UE may set the first flag of the declaration to 1, enabling the TX UE to configure more SPS based on its needs. It is not essential that the declaration uses a flag to signal the presence of additional SPS reservations, and any code or signal may be used as part of the declaration.

According to an embodiment, the wireless communication method comprises releasing, by the first item of user equipment, at least one of the initial or the further semi persistent scheduling reservations in the wireless resource of the shared wireless resource pool according to a subsequent declaration.

Eventually the additional periodic reservations are not needed. For example, a change in the context of the TX UE or the RX UE may mean that less bandwidth is needed, or the TX UE may need to skip the reservations for multiple periods, the TX UE sends the next message in the initial SPS configuration with subsequent release declaration. For example, the flag 60c of the initial SPS reservation may be set to 0, and the time offset field 60d may be left blank or may not exist. As another example, the flag 60c of the initial SPS reservation may be set to 0, and the time offset field 60d may be present, but populated with null values or zero values. In another example, if it is intended that a specific UE should signal that it will not use the additional SPS resources, the last data in the additional resources may comprise a value of P_reserv = 0. In other words, the transmitting in the SPS reservation is zero, which effectively releases the SPS reservation.

According to an embodiment, an additional resource pool configuration may reuse the time and frequency reservation offset (used for retransmission) of the each transport block TB transmission. These reservation bits are optionally used to send the second retransmission or the second and third retransmission of a transport block TB. In an example, upper layers TX RE may be configured to use the reservations to reference the time and frequency of the additional SPS. For example, if resource pool is configured by three transmissions (one initial and two retransmissions), the UE may use the third transmission to send the reservation of time and frequency resources of the additional SPS.

### Time Allocation and Frequency Allocation of the Additional SPS Resources

According to an embodiment, the declaration transmitted by the first user equipment comprises a flag field, wherein the state of the flag field as logically true signals to the one or more second items of user equipment the presence of the further semi persistent scheduling reservation.
According to an embodiment, the state of the flag field as logically false signals to the one or more second items of user equipment of the cancellation of the further semi persistent scheduling reservation.

According to an embodiment, the declaration further comprises a periodic time offset field defining a periodic time offset relative to a transmission opportunity defined by the initial semi persistent scheduling reservation, and the further semi persistent scheduling reservation is transmitted at an integer multiple of the periodic time offset.

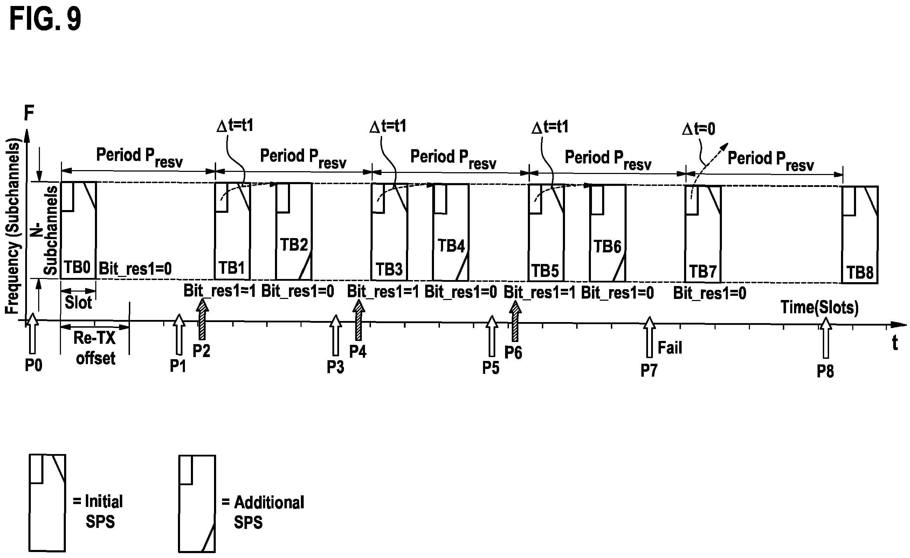

Fig. 9 schematically illustrates initial and additional SPS configuration using a flag and time offset approach where additional SPS configurations (denoted by blocks with a triangle in the bottom right-hand corner) are provided by an initial SPS configuration (denoted by a block with a triangle in the upper right-hand corner). TBO, TB1, TB3, TB5, TB7, and TB8 are initial SPS reservations. TB3 and TB5 contain semi persistently scheduled retransmission opportunities defined by a declaration (here, a flag and a time offset) in the initial SPS reservations TB0, TB1, TB3, TB5, TB 7, TB8.

The arrows P0 to P8 along the time axis denote the arrival of new data packets, e.g., new MAC-PDUs in the MAC buffer, for example. In this example, the initial SPS at TB0 does not comprise a flag for enabling additional reservations.

The next event is the arrival of two MAC-PDUs P1 and P2. This represents an increase in traffic of the sidelink channel, and furthermore P1 and P2, in an example may have different QoS requirements. The initial SPS at TB1 is configured with a declaration 60 in the form of a bit flag 60c set to "1" (see also flag 60c of Figs. 8a and 8b). This provides an additional SPS at TB2. The additional SPS at TB2comprises a declaration including a bit flag 60c set to "0" indicating the cancellation of further semi persistent scheduling from TB3, providing more resources to transmit P1 and P2. Following their transmission, the additional SPS is cancelled by switching the flag 60c. Similar sequences are observed in respect of MAC-PDUs P3 and P4, and P5 and P6. The MAC-PDU P7 is received, but a failure means that only P7 is available for transmission in place of a presumptive P8 which is not provided in the MAC-PDU buffer. Therefore, the declaration does not need to contain a declaration (flag) 60c with a value of "1", because TB6 is enough of the shared resource pool to transmit P7 in the side channel.

A further optional feature in Fig. 9 is that for each SPS containing a declaration with a positive flag, the time offset field 60d of the initial SPS reservation defines the time offset until a further semi persistent scheduling reservation in the reservation period is provided.

The frequency resources of additional SPS reservations are optionally configured or pre-configured to occupy all (and the same) frequency resources of the initial SPS configuration in subsequent slots. In an embodiment, the modulation and coding scheme MCS of the additional transport blocks TB has to be adapted to fit the same available resource allocation of the initial SPS and the available date sizes (which may vary for initial SPS and declared SPSs). This may simplify the TX UE resource selections. Such a scheme is as illustrated in Fig. 9.

According to an embodiment, the state of the flag field as logically false signals to the one or more second items of user equipment of the cancellation of the further semi persistent scheduling reservation.

If the flag field is set to "1", the time offset Δt, representing a time offset from the transmission opportunity of the initial SPS is set in the sidelink control channel to the required offset value. In an embodiment, the time offset can be configured to be allocated in a second sidelink control channel SCI or a first sidelink control channel. If the time offset is set in a first sidelink control channel, the TX UE first SCI format.

The time offset in the configured location of the SCI is used, in an embodiment, to indicate the time offset between an initial SPS transmission opportunity and one or more additional periodic resources. In an example, the time offset may be set as a quantized offset in slot counts (either physical slots or logical slots). In an example, a physical slot is a consecutive slot in the wireless resource pool. In an example, a logical slot is a slot from the resource pool configurations. For example, Δt=1 means one slot, 10 slots, or 100 slots, or any pre-configured or configured range. For example, Δt=2 means two slots, 20 slots, or 200 slots or any pre-configured or configured range. In another example, the gap in milliseconds, or another time reference format.

According to an embodiment, the further semi persistent scheduling reservation uses the same set of frequency resources as those used by the semi persistent scheduling reservation, wherein the frequency resources comprise at least one frequency resource having a first frequency index.

According to an embodiment, the first and second sets of frequency resources do not overlap, do partially overlap, or are identical.

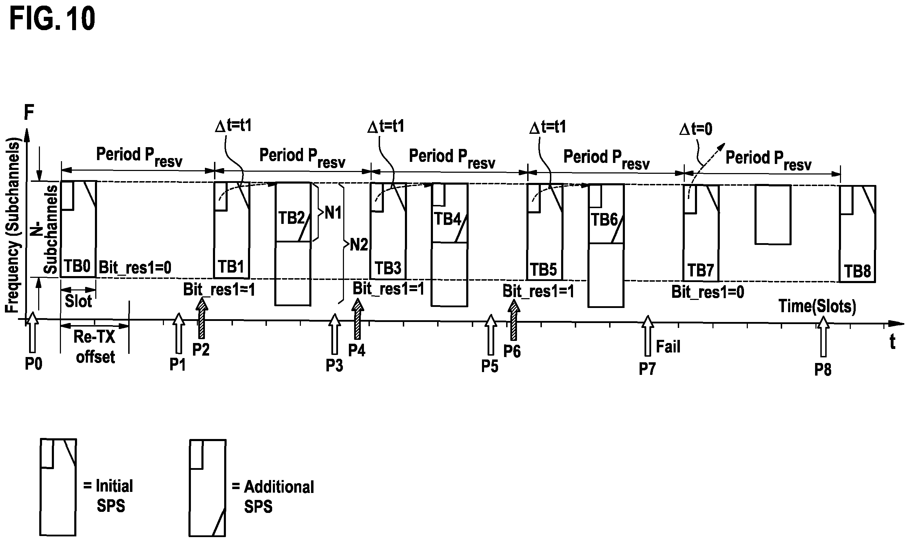

Fig. 10 schematically illustrates additional SPS configuration using a flag and time offset approach with flexibly allocated frequency resources. In the example of Fig. 10, the graphical and notation conventions established in Fig. 9 are continued and changes to them are discussed here. In an embodiment, the TX UE (first UE) the size (frequency or time duration) of the semi persistent scheduled reservations arbitrarily. In an embodiment, the starting frequency index of every additional SPS reservation has to be the same as the starting frequency index of the initial transmission. This reduces the extra signalling that would otherwise be required to signal the frequency start of the next reservation.

Fig. 10 therefore illustrates another variant of time offset reservation, where the additional SPS has to start from exactly the same subchannel as the initial SPS. In an embodiment, the availability of frequency resources (such as how many subchannels are comprised of a set of frequency resources) is arbitrarily adapted based on the transport block size (MAC-PDU size), reliability (modulation and coding depth in combination with channel conditions) of the additional traffic. This arbitrary variation of additional SPS reservations is, for example, defined in the "Freq Flag" 60e declaration of the initial SPS reservation or additional SPS reservations. The arbitrary variation of the frequency resource of additional SPS reservations enables sidelink communication between first and second UEs to changing transmission contexts or QoS requirements.

In an embodiment, the optional frequency flag 60e indicates the amount of frequency resources used for the additional SPS's. The skilled person will appreciate the flag can take many different forms without loss of generality. For example, the optional frequency flag 60e may comprise a one-bit flag. If the frequency flag is set to 0, then the additional resources may consume less or equal to resources of the initial transmission. When the frequency flag is set to 1, the UE may indicate it uses more than the allocated resources of the initial SPS.

Another option comprises a frequency flag 60e comprising a small number of bits, enabling quantisation of how many frequency resources may be used compared to the initial SPS. For example, a frequency flag of "00" implies less than half, a frequency flag of "01" implies more than half but less than all frequency resources. A frequency flag of "10" implies more than all resources but less than double, and a frequency flag of "11" bigger than double the resources used for the initial SPS reservation. A further option would enable the frequency flag 60e to represent Log2(total number of available frequencies subchannels) which is the maximum flexible frequency allocation indicator or flag, enabling identification of the number of allocated subchannels directly.

### Optional Periodicity Identifier

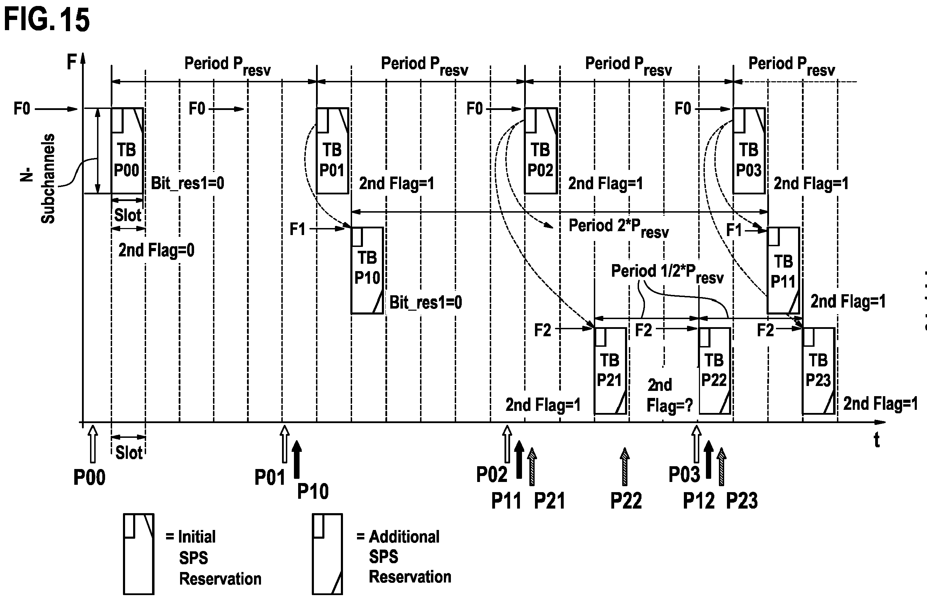

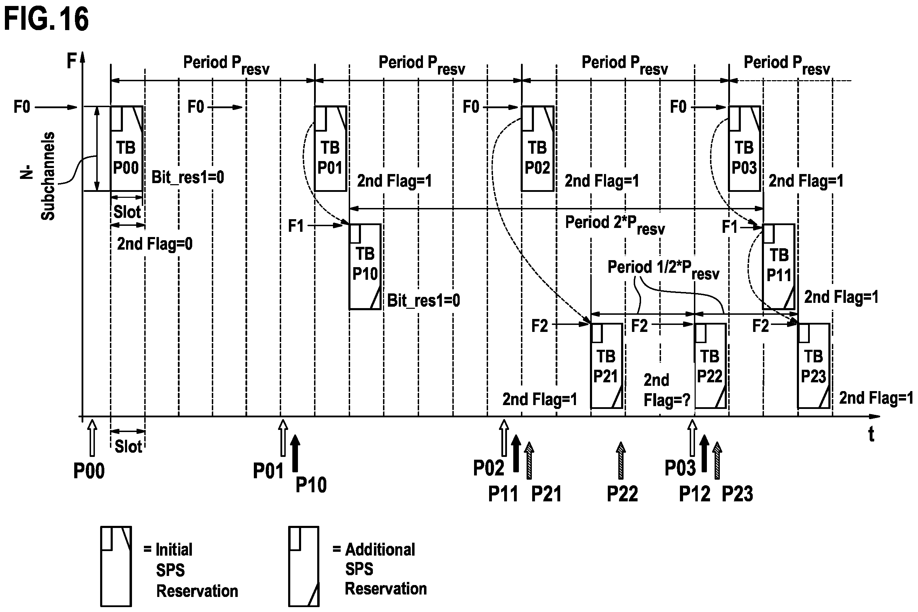

In an embodiment, the control field 60b of the initial SPS may comprise a periodicity identifier. In an embodiment, if the periodicity identifier does not exist, the period of all additional SPS resources will have the same periodicity P as for the initial SPS - in other words, "P_reserv". In an embodiment, a periodicity identifier exists in the declaration, and the periodicity of the additional periods is a function of the given SPS period "P_reserv", as illustrated Fig. 15 or 16.
For example, P(of an additional SPS) = 2, 3, 4 ..., N*P_reserv, or P (of an additional SPS) = ½, 1/3, ¼, ..., 1/N*P_reserv.

In an embodiment, one or more of the periodicity identifier equations may be configured or preconfigured, for example per shared resource pool. In this case, both TX (first) and RX (second) UE are provided with the equations, or the index of a pre-configured table, where each entry in the table represents a value or coefficient of the equation. Therefore, the periodicity identifier needs to signal only the index in the table for the relations above.
According to an embodiment, the method further comprises:
- determining, at the second item of user equipment, a periodicity of an additional transmission in the shared wireless resource pool from the second item of user equipment based on the periodicity of the initial semi persistent scheduling reservation sent via the first item of user equipment, before the first item of user equipment transmits the least one further semi persistent scheduling reservation; and
- transmitting, from the second item of user equipment, a further item of data using the shared wireless resource pool based on the determined periodicity of the additional transmission.

Accordingly, in an example, the UE may receive more than one packet, either from the upper layer of the U E, or from other U Es. The TX U E (first U E) may select more than a subsequent transmission at time offsets. The new periods can be referenced in the last possible transmission opportunity of either initial or additional periodic transmissions. For example, one fixed offset for forward reservations may be used, or the new period may be referenced in the initial SPS transmission opportunity (as a declaration of the number of offsets.

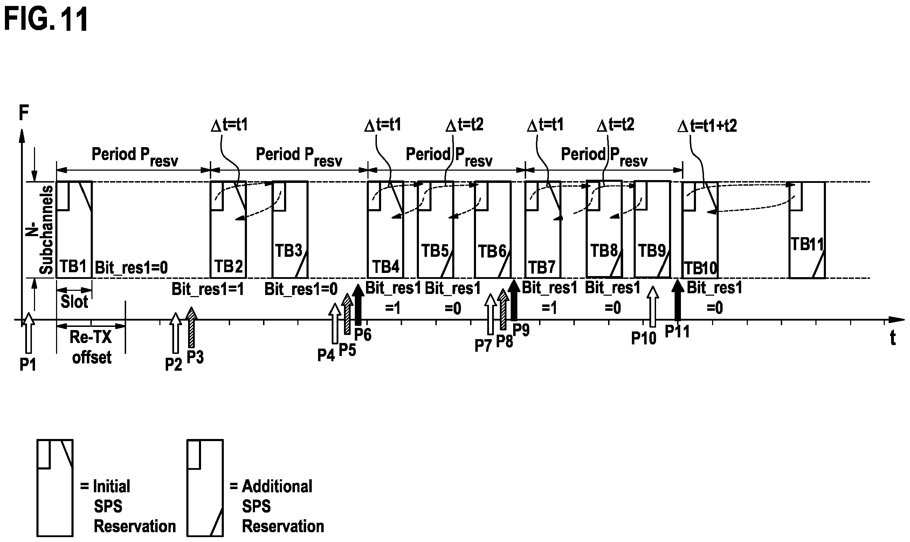

Fig. 11 schematically illustrates an example of an additional SPS period with sequential reservation. Graphical conventions are maintained from prior figures. Δt = t1 from TO, . Δt = t2 from the subsequent transmission.

According to an embodiment, the method further comprises:
- transmitting, by the first item of user equipment, the first and/or second items of data for transmission to the one or more second items of user equipment, wherein data transmitted in the at least one further semi persistent scheduling reservation comprises a backwards reference to a previous semi persistent scheduling reservation that established the further semi persistent scheduling reservation, or wherein data transmitted in the initial semi persistent scheduling reservation comprises a forward reference to the further semi persistent scheduling reservation.

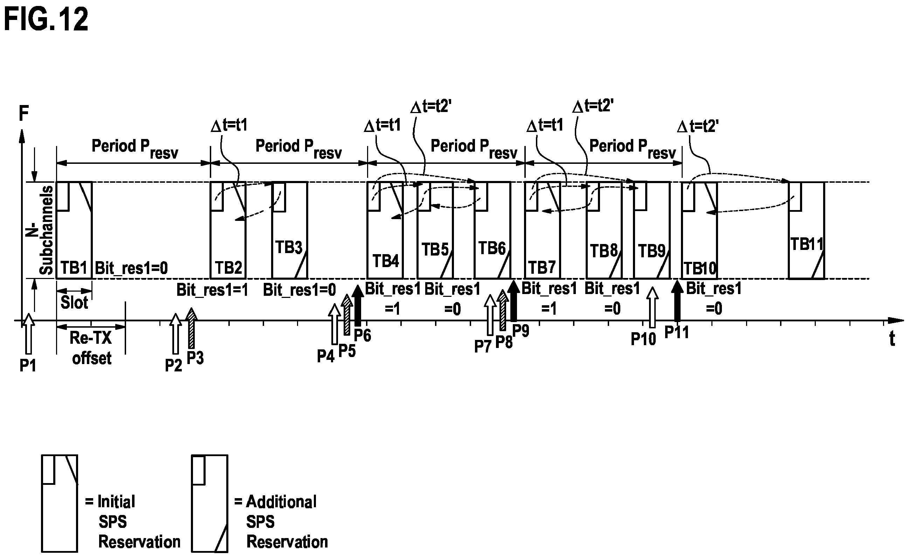

Fig. 12 schematically illustrates an example of an additional SPS period with series reservation with forward reservation and optional backward reservation. Graphical conventions are maintained from prior figures. Therefore, in Fig. 12, Δt = (t1; t1+t2; t1+t2+t3).

### Backwards Reference

In an embodiment, on each additional periodic transmission initiated by the initial SPS, a backwards reference to the original initial last SPS transmission may be provided, as illustrated by the backwards arrows between TB3 and TB2 in Fig. 11, for example.

In an example, a negative sign bit may be added to the time offset most significant bit. In all forward reservation, the offset MSB is 0. For additional SPS periods, the forward reservation will have the MSB as zero and for backward MSB = 1.

In an example, a negative sign bit may be added to the flag 60c, where the first offset is the forward (with MSB = 0) and the second offset (if not the last additional SPS) is the backward SPS offset.

### Termination of Additional SPS based on Reselection Counter

According to an embodiment, the method further comprises:
- initiating a reselection counter at the time of transmitting the initial or at least one further semi persistent scheduling reservation; and
- cancelling the initial or at least one further semi persistent scheduling reservation based on the value of the reselection counter.

An example, an SPS lifetime is selected based on a randomly selected reselection counter RC (for example, between two values, such as 5 or 15 time periods, where the RC can be extended to other periods).

If an initial SPS transmission reserves one or more additional SPS, the transmission duration and number of repeated periods is/are tied to the initial SPS reselection counter RC. If the initial SPS RC counter expires and/or random expansion is not successful, the UE may perform any of the following options:
In an example, the UE terminates the initial SPS and all its initiated additional SPS periods.
In an example, the UE may terminate the initial SPS and continue the additional SPS periods at least until the RC counter expires.

Afterwards, the UE may select a new initial SPS and complemented with additional periodic transmission. Accordingly, several examples have been given of how the initial or at least one further semi persistent scheduling reservation is cancelled.

### RX UE Resource Exclusion, Re-Evaluation, and Pre-Emption for the Additional SPS

According to an embodiment, there is provided a second item of user equipment wherein if, at the second item of user equipment, at least one resource comprised in the first set of candidate resources conflicts with the resources defined by the initial semi persistent scheduling reservation and/or the least one further semi persistent scheduling reservation, pre-empting, at the second item of user equipment, a set of candidate resources based on the initial semi persistent scheduling reservation and/or the least one further semi persistent scheduling reservation, if data to be transmitted by the second item of user equipment exceeds a priority value comprised in the initial semi persistent scheduling reservation and/or the least one further semi persistent scheduling reservation.

If an initial reservation has a periodicity "P_reserve", the additional periods will also have the same periodicity with only shifted offsets. The offsets may be configured as discussed above. Once the RX UE can decode the configured additional SPS offsets, the UE has to exclude the offset slots at each period "P_reserv" if the reservations meet the exclusion conditions. An example of an exclusion condition is that the RSSI or RSRP exceed the indicated threshold computed directly before excluding resources from initial transmission. However, if time lapses, a threshold may be adapted for exclusion, where the measured RSRP or RSSI threshold is a function of the priority pair between the TX UE and RX UE.

In an example, to determine the periodicity of additional transmissions at the RX UE, in other words, before the TX UE sends the first SCI of the additional resources, the RX UE may follow the following steps:
Firstly, if an initial reservation has a priority P, the extra reservation (if not used) is automatically prioritised P-1, P-2, and so on. If used, then it will get the priority from the TX priority field. Secondly, if an initial reservation has a priority P, the extra reservation (if not used) will get automatically priorities P as in the initial reservation.

In an embodiment, either of the approaches outlined above is be configured for each shared resource pool.

Either method discussed above is configured for each resource pool. The first method (having descending priority value) means that additional reservation is only valid when the additional transmissions have higher priority, i.e., in C-V2X Priority P is lower than priority than P-1 (inverse order). The second way can be used if the initial transmission has the highest priority value (e.g., P=0). However, in its general form, the second approach, when configured, assumes that additional reservations has the same priority as the initial SPS.

When the TX UE sends its additional SPS periods, the actual priority has to indicated as in every SPS transmission priority in C-V2X. In case of re-evaluation or pre-emption of pre-reserved resources (from TX UE point of view, i.e., when the TX UE will drop or give up reserving a certain slot/offset for additional resources), TX-UE may evaluate/pre-empt its
additional reservation after signalling them in the initial SPS TO. This may happen if the conditions for re-evaluation/pre-emption is/are specified and they are met.

From RX UE perspective, an RX UE may re-evaluate or pre-empt its selected or reserved resources if it can decode the initial SPS transmission with additional SPS configuration. It is possible that the whole reserved SPS resources at RX UE can be re-evaluated/pre-empted from the next period or from a sub sequent period onwards. However, if the additional resources are only reserved for a single transmission (in the first decoded transmission of the initial transmission, the reserved period (P_reserv) equal 0), only one or few SPS TO(s) at the RX UE can be re-evaluated/pre-empted.

### Exclusion Based Backward Reference:

A UE may decode the initial SPS and its possible additional SPS, where the backward references can be identified using backwards signalling. The backwards reference can identify SPSs in the past where the UE may have not received them either due to half-duplex, resource collision, etc.

### Additional SPS Periodicities with Frequency offset/ SPS ID

According to an embodiment of the first aspect, dynamic adaptation of resource reservations of a sidelink channel using semi persistent scheduling in a way that accommodates additional configured transmissions (for example, "SL_SPS") with frequency offsets and SPS ID. In this case, an initial SPS may be configured with frequency start index F0, N-sub channels, transmission occasion TO, and a periodicity P. In an embodiment, one or more additional SPS sequences can be configured in a subsequent timeslot and starting from a certain frequency offset in that timeslot. In an embodiment, the additional SPS can span one or more sub channels, where the number of subchannels may be greater than, equal, or less than the initial SPS. In an embodiment, the initial SPS and the additional SPS have a serial identifier number in a binary format, for example. In an example, the periodicity of the additional configured periodic resources such as the SPS is a function of the initial SPS. In an embodiment, the additional period may be configured or preconfigured or decided by the UE based on an equation. In general, the initial SPS references list all additional SPSs or only the next possible SPSs. In an embodiment, the additional SPS may reference another one additional SPS and one backward SPS appearing in an earlier slot in time.

According to an embodiment, the method further comprises:
- receiving, at a first item of user equipment, at least first and a second items of data for transmission via a semi persistent scheduling mode, wherein the first item of data requires a different quality of service guarantee compared to the second item of data;
- notifying, by the first item of user equipment, one or more second items of user equipment of at least two reservations of a wireless resource defined in the shared wireless resource pool according to a first and a second declaration comprised in an initial or further semi persistent scheduling reservation of the sidelink channel, wherein the first declaration is configured to provide a first additional semi persistent scheduling reservation providing the quality of service guarantee of the first item of data, and the second declaration is configured to provide a second additional semi persistent scheduling reservation required for the quality of service guarantee of the second item of data; and
- transmitting the first and second items of data in their corresponding first and second additional semi persistent scheduling reservations in the shared wireless resource pool according to the first and second declarations.

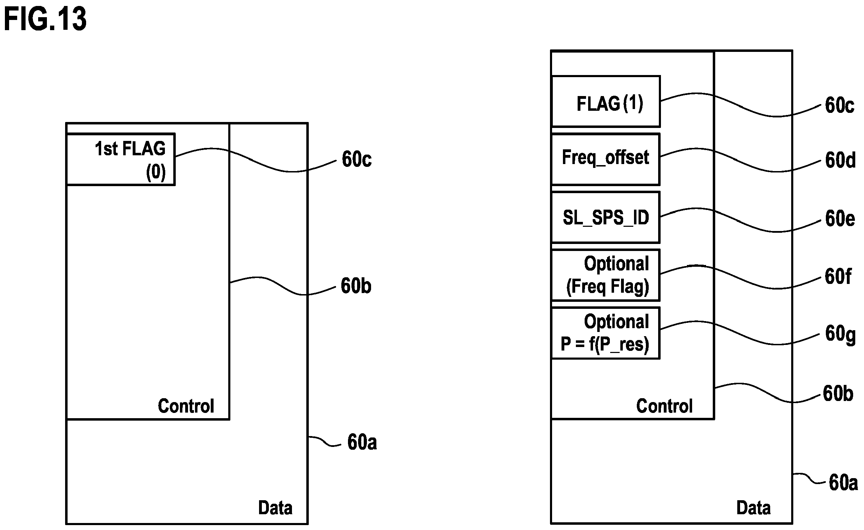

Fig. 13 schematically illustrates multiple SPS configuration fields in initial and additional SPSs. In particular, a transmission opportunity of a TX UE's initial SPS reservation with no additional periods according to this embodiment may comprise one or more of a data field 60a, a control field 60b, and a flag field 60a. In common with embodiments previously discussed, when the flag field 60a is set to 0, no additional SPS reservations are present. An embodiment of a transmission opportunity of a TX UE initial SPS reservation with additional parallel SPS reservations is shown in data unit 60a. In particular, the control field 60b comprises one or more of a frequency offset field 60d, an SL_SPS_ID field 60g, an optional frequency flag field 60e, and an optional "p_res" field 60f. The "p_res" field signifies the probability of a reservation, to enable the clearance of subsequent resources or to indicate that the present period is the last declared additional period.

### Frequency Offset for Additional Periodic Configurations

In an embodiment, in order to identify that a TX UE is performing multiple configured grants, the UE may set in the initial SPS and all subsequent additional SPSs, a second flag to one, or allocate a frequency offset F to a non-zero value. In an example, the frequency offset in the initial SPS may indicate only the next SPS or, additionally, all or some of the additional SPSs. In the first case, the "Freq_flag" 60e will contain the offset of frequency where the additional transport block starts (in subchannel counts). For example, if "Freq_offset" 60h indicates F1, then the transmission starts from F1 on up to a number of consecutive subchannels L. In another embodiment, where more frequency offsets are referenced, then the "Freq_flag" 60e may contain F1, F2, F3 etc. In an embodiment, the number of the frequency offsets equals the number of parallel configured SPSs (initial, and all additional, for example). As an example, the number of bits per frequency reference is fixed and configured in each resource pool.
In an embodiment, an additional "Freq_Flag" may be signalled to identify a quantised value of the number of configured subchannels.

### Additional Periodicity Identifier

The declaration 60 may comprise an optional periodicity identifier. If the periodicity identifier does not exist, then the periodicity of all additional SPS periodic configured resources will have the same periodicity P as for the initial SPS - i.e. P_reserv. If the periodicity identifier exists, then the periodicity of the additional periods is a function of the initial SPS period P_reserv.

In an embodiment, P (of an additionl SPS) = 2, 3, 4, ..., N*P_reserv. In an embodiment, P(of an additional SPS) = ½, 1/3, ¼, ..., 1/N*P_reserv.

Where some of these equations are configured or preconfigured, such as per resource pool, both TX and RX UE know the equations or the index of a pre-configured table where each entry in the table represents a value or coefficient of the equation. Therefore, the periodicity identifier needs to signal only the index in the table for the relations above.

### Optional Frequency Flags

Additionally, the UE may set another optional flag indicator to indicate the amount of frequency resources used for the initial SPSs. This flag can be a one bit flag, a few bit flag, or a binary number exactly identifying the number of subcarriers identified.

Fig. 13 schematically illustrates multiple SPS configuration fields in initial and additional SPSs. In particular, a transmission opportunity of a TX UE's initial SPS reservation with no additional periods according to this embodiment may comprise one or more of a data field 62a, a control field 60b, and a flag field 60a. In common with embodiments previously discussed, when the flag field 60a is set to 0, no additional SPS reservations are present. An embodiment of a transmission opportunity of a TX UE initial SPS reservation with additional parallel SPS reservations is shown in data unit 60a. In particular, the control field 60b comprises one or more of a frequency offset field 60h, an SL_SPS_ID field 60g, an optional frequency flag field 60e, and an optional reservation release flag 60f.

According to an embodiment, the declaration comprised in the semi persistent scheduling reservation of the sidelink channel further comprises a frequency reservation field enabling at least one additional semi persistent scheduling reservation to cover a different configuration of frequency resources of the shared wireless resource pool compared to the frequency resources used by the initial semi persistent scheduling reservation, wherein the further semi persistent scheduling reservation optionally comprises one or more of the same frequency resources from the set of frequency resources as the initial semi persistent scheduling reservation.

According to an embodiment, the declaration in the initial semi persistent scheduling reservation further comprises a frequency offset field defining at least one frequency offset of at least one further semi persistent scheduling reservation relative to the further semi persistent scheduling reservation of the sidelink channel; and transmitting, by the first item of user equipment, at least one item of data for transmission to the one or more second items of user equipment via a first set of frequency resources in a first time slot, and transmitting, by the first item of user equipment, a further item of data for transmission via a second set of frequency resources in a second time slot.

According to an embodiment, the second time slot is a direct subsequent time slot or a pre-configured number of slots relative to the initial or further semi persistent scheduling reservation of the sidelink channel.

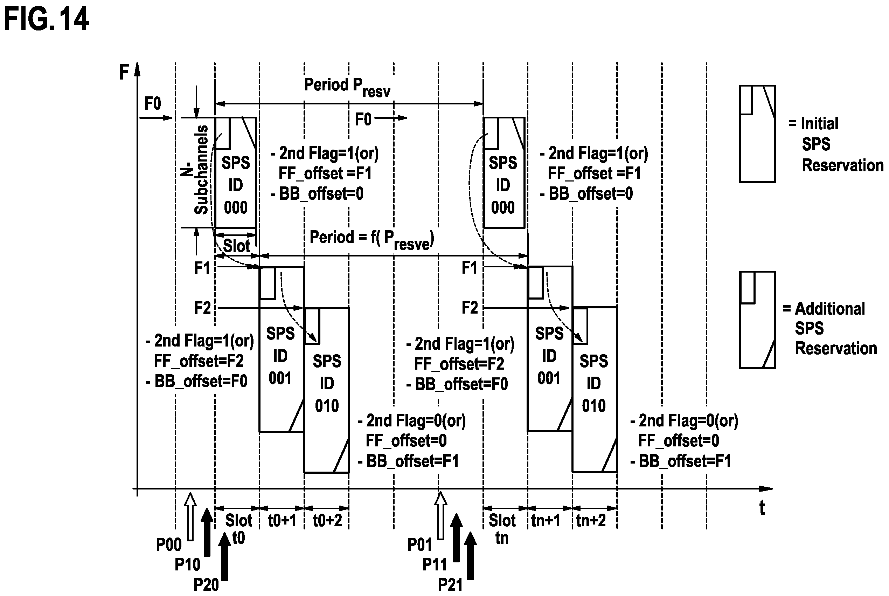

Fig. 14 schematically illustrates multiply configured SPS resources with indexing and frequency offset. Graphical conventions from previous resource pool diagrams in the specification are maintained where appropriate. As discussed above, Fig. 14 illustrates an additional SPS reservation scheme where the additional SPS reservations migrate in the frequency domain. According to the embodiment of Fig. 14, the declaration of the initial or further semi persistent scheduling reservation comprises a flag indicator for indicating the presence of a frequency offset mode of a subsequent additional SPS reservation. According to an embodiment, the declaration of the initial or further semi persistent scheduling reservation comprises an indicator for indicating the amount of a frequency offset of a subsequent additional SPS reservation compared to the SPS reservation comprising the declaration. According to an embodiment, the declaration of the initial or further semi persistent scheduling reservation comprises an indicator for indicating the frequency resources (in, for example, subchannels of the shared resource pool) of a subsequent additional SPS.

### Multiple SPS ID for Initial and Additional Periodic Configurations

In an embodiment, when a TX UE receives multiple traffic P00, P10, P20 with different periodic requirements (and also data lengths), the UE may configure in its initial SPS another one or more additional SPS. In an embodiment, the UE may need to identify each of the periods (the initial and the additional(s)) with a unique ID, e.g., a SL_SPS_ID. Wherein the SL_SPS_ID may take the values: Two-bit ID, e.g., 4 parallel SPS: 00, 01, 10, 11, or Three-bit ID, e.g., 8 parallel SPS: 000, 001, 010, ..., 111.

In an example, in order to accommodate the SPS ID, the UE may insert the SPS ID in a new field with the required number of bits, e.g., 2 or 3. However, according to another alternative, the UE may truncate its source ID and set the n most significant bits (MSB) or the n least significant bits (LSB) to the source ID, i.e., where n is the SPS ID number of bits.

In another words, the source ID of the TX UE (e.g., a UE with multiple services or a relay) is optionally truncated to Source_ID_bit_length - n bits, where the n bits (either MSB or LSB) represents the configured resources ID (SL_SPS_ID). The number of bits n is configure/pre-configured per, e.g., resource pool, where in 2n represents the maximum possible number of configured grants. Hence, for each of the generated SPS, a separate resource reselection counter (RC) can be easily generated. In an embodiment each SPS can have its own life-time. For example, if A UE drops one ID where its SPS is not needed at all, the UE may use the same ID for a new SPS if needed.

### Receiver Behaviours and Data Exclusion:

According to a fifth aspect, there is provided a wireless communication method for dynamically adapting resource allocation of a sidelink channel using semi persistent scheduling further comprising:
- receiving, via a signaled declaration, at the second item of user equipment, the declaration comprised in the initial semi persistent scheduling reservation of the sidelink channel, and
- obtaining, by the signaled declaration, at least one further semi persistent scheduling reservation using the information comprised in the declaration the initial semi persistent scheduling reservation; and
- receiving, at the second item of user equipment, data from the first item of user equipment during the at least one further semi persistent scheduling reservation, wherein allocation implies exclusion, or vacating, of selected resources at the receiver.
According to an embodiment, the second item of user equipment is configured to reselect a portion of the shared wireless resource pool based on the initial semi persistent scheduling reservation and the at least one further semi persistent scheduling reservation.
According to an embodiment, the second item of user equipment is configured to reselect at the second item of user equipment, a portion of the shared wireless resource pool that is not declared by the initial semi persistent scheduling reservation and/or the least one further semi persistent scheduling reservation.

According to an embodiment, there is provided selecting, at the second item of user equipment, a first set of candidate resources in the shared wireless resource pool;
- comparing, at the second item of user equipment, the first set of candidate resources in the shared wireless resource pool to the resources defined by the initial semi persistent scheduling reservation and/or the least one further semi persistent scheduling reservation;
- if, at the second item of user equipment, at least one resource comprised in the first set of candidate resources conflicts with the resources defined by the initial semi persistent scheduling reservation and/or the least one further semi persistent scheduling reservation, modifying, at the at the second item of user equipment, the first set of candidate resources to form a second set of candidate resources of the second item of user equipment.
In an example, a receiver UE which decodes either a 2nd Flag bit =1 or identifies a frequency offset, collects the source ID and checks for the last/first n bits and if: 000 -> SPS Index 1, 001 -> SPS Index 2, and so on.

Additionally, an RX UE will conduct the number of parallel configured grants via the number of valid SPS. Hence, in order for an RX U E to exclude all resources of a TX performing a parallel configured periodic resources, the receiver UE can build a map with the multiple configure grants of a relay-UE or a multi-service UE and then the UE can exclude these resources.

### Time Allocation for Additional Periodic Configurations

Based on the SPS ID, the location of the SPS in time is defined. The definition of time slots is
configured per resource pool, such that an initial SPS has an SL_SPS_ID, e.g., equal 000, then this initial SPS exists in a reference slot, e.g., t0. The additional SPS is also allocated based on its IDs, e.g., SL_SPS_ID = 001 exist in t0 + Delta slots. A second additional SPS is allocated based on its IDs, e.g., SL_SPS_ID=010 exist in t0 + 2* Delta slots. Delta is pre-configured as well in natural number counts, i.e., 1,2,3 ... etc.. If Delta is not configured, then it is automatically 1, i.e., Delta =1. In this case SL_SPS_ID 000 is allocated at t0 and SL_SPS_ID 001 is allocated in a next subsequent slot, as shown in Fig. 14.

### Forward and Backwards Reference

Fig. 15 schematically illustrates an alternative case of two additional SPS. Graphical conventions from previous resource pool diagrams in the specification are maintained where appropriate.

In an embodiment, a forward and/or backward reference of the additional SPS / initial SPS is provided. For forward referencing, either the initial SPS references all additional SPS frequency offsets, where the time offsets are uniquely identified by the SPS ID as stated above, and as illustrated in Fig. 15 for more details.

In another embodiment, one SPS reference only one additional SPS (i.e., referencing its frequency offset). In this case, an initial SPS reference the next SPS and the last SPS has the frequency offset field = 0 (i.e., no additional SPSs). This is as illustrated in Fig. 16 for more details.

For backward referencing, the two options are possible. In an embodiment, each SPS reference to all backward Frequency offsets. In an embodiment, each SPS referenced only one SPS backward, and the time can be conducted from the SPS ID and the initial SPS has no backward reference.

Fig. 16 schematically illustrates an alternative case of two additional SPS with different periodicity and frequency index. Graphical conventions from previous resource pool diagrams in the specification are maintained where appropriate.

According to an embodiment, the declaration comprised in the initial or further semi persistent scheduling reservation is a quantized code defining the frequency resources of at least one further semi persistent scheduling reservation relative to the frequency resource of the semi persistent scheduling reservation, or wherein the declaration comprised in the initial or further semi persistent scheduling reservation is an indication of one or more frequency resources available to at least one further semi persistent scheduling reservations.

According to an embodiment, the indication is a bitmap of one or more time and frequency resources.

According to an embodiment, the method further comprises:
- assigning a first code (SPS ID) to the first additional semi persistent scheduling reservation, and assigning a second code to the second additional semi persistent scheduling reservation; and
- initiating a first reselection counter to track the first additional semi persistent scheduling reservation, and initiating a second reselection counter to track the second additional semi persistent scheduling reservation; and
- cancelling or reassigning the first or second additional semi persistent scheduling reservations based on the first or second reselection counters, respectively. According to the second aspect, the wireless device 74 configured for dynamically adapting resource reservation of a sidelink channel using semi persistent scheduling, comprises:
- non-transitory computer readable media comprising machine readable instructions; and
- a processor configured to load and to execute the machine readable instructions to cause the wireless device to execute the steps according to the first aspect or its embodiments described above.

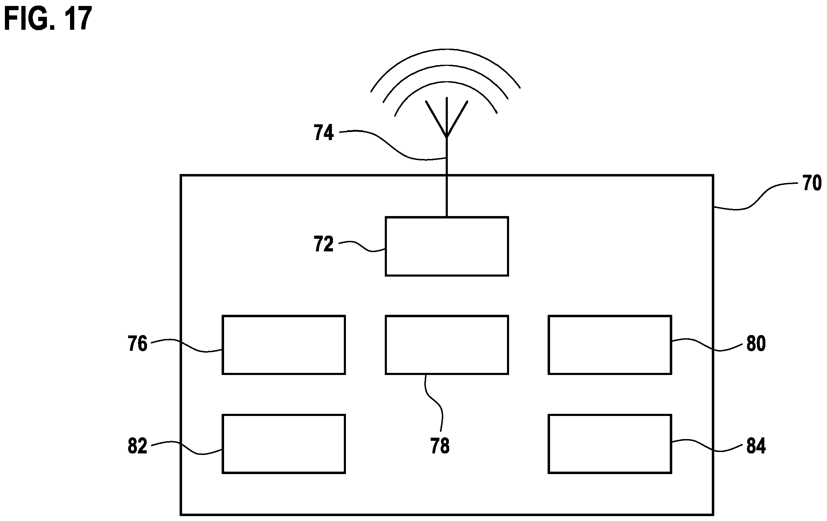

Fig. 17 schematically illustrates wireless device 74 in accordance with the second aspect. The wireless device 74 comprises non transitory computer readable media 82 and a processor 78 capable of reading the non transitory computer readable media 82. The wireless device 74 may further comprise a radio access module 72 communicatively coupled to the processor 78 and a wireless antenna 78. The wireless device 74 comprises an input interface 76 for receiving data to be transmitted, and an output interface 80 for communicating received data. The wireless device comprises a power source 84. In examples, the wireless device 74 may be referred to as a UE, a terminal, a radio network node, and the like. The wireless device may support device to device, internet of things, and V2X communications.

According to a third aspect, there is provided a system for wireless communication , comprising:
- a first item of user equipment UE1; and
- a second item of user equipment UE2;
   wherein the first item of user equipment is configured to receive a first and a second item of data for transmission via a semi persistent scheduling mode, and a status indication of a shared wireless resource pool of the first item of user equipment and the one or more second items of user equipment;
- wherein the first item of user equipment is configured to notify, by the first item of user equipment, an initial semi persistent scheduling reservation for the first item of data to the one or more second items of user equipment via the shared resource pool;
- wherein the first item of user equipment is configured to notify one or more second items of user equipment of at least one reservation of a wireless resource defined in the shared wireless resource pool according to a declaration comprised in a further semi persistent scheduling reservation of the sidelink channel, wherein the declaration signals the establishment, alteration, or cancellation of at least one semi persistent scheduling reservation; and
- wherein the first item of user equipment is configured to transmit, by the first item of user equipment, the second item of data for transmission to the one or more second items of user equipment via the wireless resource in a transmission opportunity of the shared wireless resource pool defined by the declaration comprised in the initial or the further semi persistent scheduling reservation.

Fig. 1 schematically illustrates an example of a "V2X" configured system comprising a sidelink. In an embodiment, the first item of user equipment is a transmitting UE (TX UE) and the second item of user equipment is a receiving UE (RX UE).

According to an embodiment of the third aspect, the system further comprises a network node (gNB). The network node is configured to transmit at least one status indication of the shared wireless resource pool of the first item of user equipment and the one or more second items of user equipment.

According to a fourth aspect, there is provided a computer readable medium comprising machine readable instructions configured to cause a processor to perform the method according to the first aspect.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications and further applications to these within the scope of the specification are desired to be protected.

### Embodiments

1. A wireless communication method (32) for dynamically adapting resource reservation of a sidelink channel using semi persistent scheduling, comprising:
   - receiving, by a second item of user equipment, an initial semi persistent scheduling reservation for an item of data transmitted by the first item of user equipment (UE1) via a shared resource pool;
   - receiving, at the second item of user equipment, from a first item of user equipment, at least one reservation of a wireless resource defined in the shared wireless resource pool according to a declaration comprised in the initial or a further semi persistent scheduling reservation of the sidelink channel, wherein the declaration signals the establishment, alteration, or cancellation of at least one semi persistent scheduling reservation in respect of the first and/or second item of data; and
   - receiving, at the second item of user equipment, the item of data transmitted to the one or more second items of user equipment (UE2) via the sidelink channel from the first item of user equipment (UE1) in a transmission opportunity of the shared wireless resource pool defined by the declaration by the first item of user equipment comprised in the initial or the further semi persistent scheduling reservation.
2. The wireless communication method (32) according to embodiment 1,
   - receiving, at the second item of user equipment, at least one of the initial or the further semi persistent scheduling reservations in the wireless resource of the shared wireless resource pool according to a subsequent declaration indicating that the first item of user equipment has pre-empted, re-evaluated, or excluded a portion of the shared wireless resource.
3. The wireless communication method (32) according to one of embodiments 1 or 2,
   wherein the declaration transmitted by the first user equipment comprises a flag field, wherein the state of the flag field as logically true signals to the one or more second items of user equipment the presence of the further semi persistent scheduling reservation.
4. The wireless communication method (32) according to embodiment 3, wherein the state of the flag field as logically false signals to the one or more second items of user equipment of the cancellation of the further semi persistent scheduling reservation.
5. The wireless communication method (32) according to embodiment 4, wherein the declaration comprises a periodic time offset field defining a periodic time offset relative to a transmission opportunity defined by the initial semi persistent scheduling reservation, and the further semi persistent scheduling reservation is transmitted at an integer multiple of the periodic time offset.
6. The wireless communication method (32) according to one of the preceding embodiments 1-5, further comprising:
   - determining, at the second item of user equipment, a periodicity of an additional transmission in the shared wireless resource pool from the second item of user equipment based on the periodicity of an initial semi persistent scheduling reservation sent via the first item of user equipment, before the first item of user equipment transmits the least one further semi persistent scheduling reservation; and
   - transmitting, from the second item of user equipment, a further item of data using the shared wireless resource pool based on the determined periodicity of the additional transmission.
7. The wireless communication method (32) according to one of the preceding embodiments 1-6,
   wherein the further semi persistent scheduling reservation uses the same set of frequency resources as those used by the semi persistent scheduling reservation, wherein the frequency resources comprise at least one frequency resource having a first frequency index.
8. The wireless communication method (32) according to one of the preceding embodiments 1-7,
   wherein the declaration comprised in the semi persistent scheduling reservation of the sidelink channel further comprises a frequency reservation field enabling at least one additional semi persistent scheduling reservation to cover a different configuration of frequency resources of the shared wireless resource pool compared to the frequency resources used by the initial semi persistent scheduling reservation, wherein the further semi persistent scheduling reservation optionally comprises one or more of the same frequency resources from the set of frequency resources as the initial semi persistent scheduling reservation.
9. The wireless communication method (32) according to embodiment 7 or 8,
   wherein the declaration comprised in the initial or further semi persistent scheduling reservation is a quantized code defining the frequency resources of at least one further semi persistent scheduling reservation relative to the frequency resource of the semi persistent scheduling reservation, or wherein the declaration comprised in the initial or further semi persistent scheduling reservation is an indication of one or more frequency resources available to at least one further semi persistent scheduling reservations.
10. The wireless communication method (32) according to one of the preceding embodiments 1-9, further comprising:
   - receiving, at the second item of user equipment, the first and/or second items of data transmitted by the first item of user equipment, wherein data transmitted in the at least one further semi persistent scheduling reservation comprises a backwards reference to a previous semi persistent scheduling reservation that established the further semi persistent scheduling reservation, or wherein data transmitted in the initial semi persistent scheduling reservation comprises a forward reference to the further semi persistent scheduling reservation.
11. The wireless communication method (32) according to one of the preceding embodiments 1-10, further comprising:
   - initiating a reselection counter at the time of transmitting the initial or at least one further semi persistent scheduling reservation; and
   - cancelling the initial or at least one further semi persistent scheduling reservation based on the value of the reselection counter.
12. The wireless communication method (32) according to one of the preceding embodiments 1-11,
   wherein the declaration comprised in the initial or further semi persistent scheduling reservation further comprises a periodicity modifier field; and
   - providing at least one series of semi persistent scheduling reservations in time slots having a modified periodicity relative to the initial or further semi persistent scheduling reservation of the sidelink channel defined by the value of the periodicity modifier field.
13. The wireless communication method (32) according to one of the preceding embodiments 1-13,
   wherein the declaration in the initial semi persistent scheduling reservation further comprises a frequency offset field defining at least one frequency offset of at least one further semi persistent scheduling reservation relative to the further semi persistent scheduling reservation of the sidelink channel; and
   receiving, at the second item of user equipment, at least one item of data for transmission to the one or more second items of user equipment via a first set of frequency resources in a first time slot, and receiving, by the second item of user equipment, a further item of data for transmission via a second set of frequency resources in a second time slot,
14. The wireless communication method (32) according to embodiment 13, wherein the second time slot is a direct subsequent time slot or a pre-configured number of slots relative to the initial or further semi persistent scheduling reservation of the sidelink channel.
15. The wireless communication method (32) according to embodiments 13 or 14,
   wherein the first and second sets of frequency resources do not overlap, do partially overlap, or are identical.
16. The wireless communication method (32) according to embodiment 15, further comprising:
   - assigning a first code (SPS ID) to the first additional semi persistent scheduling reservation, and assigning a second code to the second additional semi persistent scheduling reservation; and
   - initiating a first reselection counter to track the first additional semi persistent scheduling reservation, and initiating a second reselection counter to track the second additional semi persistent scheduling reservation; and
   - cancelling or reassigning the first or second additional semi persistent scheduling reservations based on the first or second reselection counters, respectively.
17. The wireless communication method (32) according to one of the preceding embodiments 1-16, further comprising:
   - receiving, at the second item of user equipment, the declaration comprised in the initial semi persistent scheduling reservation of the sidelink channel, and
   - obtaining at least one further semi persistent scheduling reservation using the information comprised in the declaration the initial semi persistent scheduling reservation; and
   - receiving, at the second item of user equipment, data from the first item of user equipment during the at least one further semi persistent scheduling reservation.
18. The wireless communication method according to embodiment 17, further comprising:
   - reselecting, at the second item of user equipment, a portion of the shared wireless resource pool based on the initial semi persistent scheduling reservation and the at least one further semi persistent scheduling reservation.
19. The wireless communication method according to one of embodiments 17 or 18, further comprising:
   - reselecting, at the second item of user equipment, a portion of the shared wireless resource pool that is not declared by the initial semi persistent scheduling reservation and/or the least one further semi persistent scheduling reservation.
20. The wireless communication method according to one of embodiments 17 to 19, further comprising:
   - selecting, at the second item of user equipment, a first set of candidate resources in the shared wireless resource pool;
   - comparing, at the second item of user equipment, the first set of candidate resources in the shared wireless resource pool to the resources defined by the initial semi persistent scheduling reservation and/or the least one further semi persistent scheduling reservation;
   - if, second item of user equipment, at least one resource comprised in the first set of candidate resources conflicts with the resources defined by the initial semi persistent scheduling reservation and/or the least one further semi persistent scheduling reservation, modifying, at the at the second item of user equipment, the first set of candidate resources to form a second set of candidate resources of the second item of user equipment.
21. The wireless communication method according to embodiment 21, further comprising:
   - if, at the second item of user equipment, at least one resource comprised in the first set of candidate resources conflicts with the resources defined by the initial semi persistent scheduling reservation and/or the least one further semi persistent scheduling reservation:
   - pre-empting, at the second item of user equipment, a set of candidate resources based on the initial semi persistent scheduling reservation and/or the least one further semi persistent scheduling reservation, if data to be transmitted by the second item of user equipment exceeds a priority value comprised in the initial semi persistent scheduling reservation and/or the least one further semi persistent scheduling reservation.

## Claims

**1.** A wireless communication method (32) for dynamically adapting resource reservation of a sidelink channel using semi persistent scheduling, comprising:
- receiving (34), at a first item of user equipment (UE1), a first and a second item of data (MAC-PDU1,2) for transmission via a semi persistent scheduling mode, and a status indication of a shared wireless resource pool of the first item of user equipment and one or more second items of user equipment;
- notifying (36), by the first item of user equipment, an initial semi persistent scheduling reservation for the first item of data to the one or more second items of user equipment via the shared resource pool; and
- notifying (38), by the first item of user equipment, one or more second items of user equipment of at least one reservation of a wireless resource defined in the shared wireless resource pool according to a declaration (60) comprised in the initial or a further semi persistent scheduling reservation of the sidelink channel, wherein the declaration signals the establishment, alteration, or cancellation of at least one semi persistent scheduling reservation in respect of the first and/or second item of data.

**2.** The wireless communication method (32) according to claim 1,
- transmitting (40), by the first item of user equipment, the second item of data for transmission to the one or more second items of user equipment (UE2) via the sidelink channel in a transmission opportunity of the shared wireless resource pool defined by the declaration comprised in the initial or the further semi persistent scheduling reservation.

**3.** The wireless communication method (32) according to claims 1 or 2,
- releasing, or vacating, by the first item of user equipment, at least one of the initial or the further semi persistent scheduling reservations in the wireless resource of the shared wireless resource pool according to the declaration (60).

**4.** The wireless communication method (32) according to one of claims 1 to 3,
wherein the declaration (60) transmitted by the first user equipment comprises a flag field, wherein the state of the flag field as logically true signals to the one or more second items of user equipment the presence of the further semi persistent scheduling reservation.

**5.** The wireless communication method (32) according to claim 6,
wherein the state of the flag field as logically false signals to the one or more second items of user equipment of the cancellation of the further semi persistent scheduling reservation.

**6.** The wireless communication method (32) according to claim 5,
wherein the declaration (60) comprises a periodic time offset field defining a periodic time offset relative to a transmission opportunity defined by the initial semi persistent scheduling reservation, and the further semi persistent scheduling reservation is transmitted at an integer multiple of the periodic time offset.

**7.** The wireless communication method (32) according to one of the preceding claims, further comprising:
- determining, at the second item of user equipment, a periodicity of an additional transmission in the shared wireless resource pool from the second item of user equipment based on the periodicity of the initial semi persistent scheduling reservation sent via the first item of user equipment, before the first item of user equipment transmits the least one further semi persistent scheduling reservation; and
- transmitting, from the second item of user equipment, a further item of data using the shared wireless resource pool based on the determined periodicity of the additional transmission.

**8.** The wireless communication method (32) according to one of the preceding claims,
wherein the further semi persistent scheduling reservation uses the same set of frequency resources as those used by the semi persistent scheduling reservation, wherein the frequency resources comprise at least one frequency resource having a first frequency index.

**9.** The wireless communication method (32) according to one of the preceding claims,
wherein the declaration (60) comprised in the semi persistent scheduling reservation of the sidelink channel further comprises a frequency reservation field enabling at least one additional semi persistent scheduling reservation to cover a different configuration of frequency resources of the shared wireless resource pool compared to the frequency resources used by the initial semi persistent scheduling reservation, wherein the further semi persistent scheduling reservation optionally comprises one or more of the same frequency resources from the set of frequency resources as the initial semi persistent scheduling reservation.

**10.** The wireless communication method (32) according to claim 8 or 9,
wherein the declaration (60) comprised in the initial or further semi persistent scheduling reservation is a quantized code defining the frequency resources of at least one further semi persistent scheduling reservation relative to the frequency resource of the semi persistent scheduling reservation, or wherein the declaration comprised in the initial or further semi persistent scheduling reservation is a indication of one or more frequency resources available to at least one further semi persistent scheduling reservations.

**11.** The wireless communication method (32) according to one of the preceding claims, further comprising:
- transmitting, by the first item of user equipment, the first and/or second items of data for transmission to the one or more second items of user equipment, wherein data transmitted in the at least one further semi persistent scheduling reservation comprises a backwards reference to a previous semi persistent scheduling reservation that established the further semi persistent scheduling reservation, or wherein data transmitted in the initial semi persistent scheduling reservation comprises a forward reference to the further semi persistent scheduling reservation.

**12.** The wireless communication method (32) according to one of the preceding claims, further comprising:
- initiating a reselection counter at the time of transmitting the initial or at least one further semi persistent scheduling reservation; and
- cancelling the initial or at least one further semi persistent scheduling reservation based on the value of the reselection counter.

**13.** The wireless communication method (32) according to one of the preceding claims,
wherein the declaration (60) comprised in the initial or further semi persistent scheduling reservation further comprises a periodicity modifier field; and
- providing at least one series of semi persistent scheduling reservations in time slots having a modified periodicity relative to the initial or further semi persistent scheduling reservation of the sidelink channel defined by the value of the periodicity modifier field.

**14.** The wireless communication method (32) according to one of the preceding claims,
wherein the declaration (60) in the initial semi persistent scheduling reservation further comprises a frequency offset field defining at least one frequency offset of at least one further semi persistent scheduling reservation relative to the further semi persistent scheduling reservation of the sidelink channel; and
transmitting, by the first item of user equipment, at least one item of data for transmission to the one or more second items of user equipment via a first set of frequency resources in a first time slot, and transmitting, by the first item of user equipment, a further item of data for transmission via a second set of frequency resources in a second time slot.

**15.** The wireless communication method (32) according to claim 14,
wherein the second time slot is a direct subsequent time slot or a pre-configured number of slots relative to the initial or further semi persistent scheduling reservation of the sidelink channel.

**16.** The wireless communication method (32) according to claims 14 or 15,
wherein the first and second sets of frequency resources do not overlap, do partially overlap, or are identical.

**17.** The wireless communication method (32) according to one of claims 14 to 15, further comprising:
- receiving, at a first item of user equipment, at least first and a second items of data for transmission via a semi persistent scheduling mode, wherein the first item of data requires a different quality of service guarantee compared to the second item of data;
- notifying, by the first item of user equipment, one or more second items of user equipment of at least two reservations of a wireless resource defined in the shared wireless resource pool according to a first and a second declaration comprised in an initial or further semi persistent scheduling reservation of the sidelink channel, wherein the first declaration is configured to provide a first additional semi persistent scheduling reservation providing the quality of service guarantee of the first item of data, and the second declaration is configured to provide a second additional semi persistent scheduling reservation required for the quality of service guarantee of the second item of data; and
- transmitting the first and second items of data in their corresponding first and second additional semi persistent scheduling reservations in the shared wireless resource pool according to the first and second declarations.

**18.** The wireless communication method (32) according to claim 17, further comprising:
- assigning a first code (SPS ID) to the first additional semi persistent scheduling reservation, and assigning a second code to the second additional semi persistent scheduling reservation; and
- initiating a first reselection counter to track the first additional semi persistent scheduling reservation, and initiating a second reselection counter to track the second additional semi persistent scheduling reservation; and
- cancelling or reassigning the first or second additional semi persistent scheduling reservations based on the first or second reselection counters, respectively.

**19.** A wireless communication method for dynamically adapting resource allocation of a sidelink channel using semi persistent scheduling comprising:
- receiving, via a signaled declaration, at the second item of user equipment, the declaration comprised in the initial semi persistent scheduling reservation of the sidelink channel, and
- obtaining, by the signaled declaration, at least one further semi persistent scheduling reservation using the information comprised in the declaration the initial semi persistent scheduling reservation: and
- receiving, at the second item of user equipment, data from the first item of user equipment during the at least one further semi persistent scheduling reservation, wherein allocation implies exclusion, or vacating, of selected resources at the receiver.

**20.** The wireless communication method according to claim 19, further comprising:
- reselecting, at the second item of user equipment, a portion of the shared wireless resource pool based on the initial semi persistent scheduling reservation and the at least one further semi persistent scheduling reservation.

**21.** The wireless communication method according to one of claims 19 or 20, further comprising:
- reselecting, at the second item of user equipment, a portion of the shared wireless resource pool that is not declared by the initial semi persistent scheduling reservation and/or the least one further semi persistent scheduling reservation.

**22.** The wireless communication method according to one of claims 19 to 21, further comprising:
- selecting, at the second item of user equipment, a first set of candidate resources in the shared wireless resource pool;
- comparing, at the second item of user equipment, the first set of candidate resources in the shared wireless resource pool to the resources defined by the initial semi persistent scheduling reservation and/or the least one further semi persistent scheduling reservation;
- if, at the second item of user equipment, at least one resource comprised in the first set of candidate resources conflicts with the resources defined by the initial semi persistent scheduling reservation and/or the least one further semi persistent scheduling reservation, modifying, at the at the second item of user equipment, the first set of candidate resources to form a second set of candidate resources of the second item of user equipment.

**23.** The wireless communication method according to claim 22, further comprising:
- if, at the second item of user equipment, at least one resource comprised in the first set of candidate resources conflicts with the resources defined by the initial semi persistent scheduling reservation and/or the least one further semi persistent scheduling reservation:
- pre-empting, at the second item of user equipment, a set of candidate resources based on the initial semi persistent scheduling reservation and/or the least one further semi persistent scheduling reservation, if data to be transmitted by the second item of user equipment exceeds a priority value comprised in the initial semi persistent scheduling reservation and/or the least one further semi persistent scheduling reservation.

**24.** A wireless device (74) configured to dynamically adapt resource reservation of a sidelink channel using semi persistent scheduling, comprising:
- non-transitory computer readable media comprising machine readable instructions; and
- a processor configured to load and to execute the machine readable instructions to cause the wireless device to execute the steps according to one of claims 1 to 23.

**24.** A system (UE1, UE2) for wireless communication, comprising:
- a first item of user equipment (UE1); and
- a second item of user equipment (UE2);
wherein the first item of user equipment (UE1) is configured to receive a first and a second item of data (MAC-PDU1,2) for transmission via a semi persistent scheduling mode, and a status indication of a shared wireless resource pool of the first item of user equipment and at least the second item of user equipment;
- wherein the first item of user equipment (UE1) is configured to notify, by the first item of user equipment, an initial semi persistent scheduling reservation for the first item of data to at least the second item of user equipment via the shared resource pool;
- wherein the first item of user equipment (UE1) is configured to notify at least the second item of user equipment (UE2) of at least one reservation of a wireless resource defined in the shared wireless resource pool according to a declaration comprised in the initial or a further semi persistent scheduling reservation of the sidelink channel, wherein the declaration signals the establishment, alteration, or cancellation of at least one semi persistent scheduling reservation; and
- wherein the first item of user equipment (UE1) is configured to transmit, by the first item of user equipment, the second item of data for transmission to at least the second item of user equipment via the wireless resource in a transmission opportunity of the shared wireless resource pool defined by the declaration, comprised in the initial or the further semi persistent scheduling reservation.

**25.** The system of claim 24, further comprising:
- a network node (gNB);
wherein the network node is configured to transmit at least one status indication of the shared wireless resource pool of the first item of user equipment and at least the second second item of user equipment.

**26.** A computer readable medium comprising machine readable instructions configured to cause a processor to perform the method according to one of claims 1 to 22.
